# EUROPÄISCHE PATENTSCHRIFT

(11) **EP 4 128 305 B1**
(45) Veröffentlichungstag und Bekanntmachung des Hinweises auf die Patenterteilung: **23.04.2025**
(21) Anmeldenummer: 20728404.3
(22) Anmeldetag: 05.05.2020
(51) Int. Cl.: H01H 39/00, H01H 79/00, H02M 1/32, H02M 7/483

(54) **ÜBERBRÜCKUNGSSCHALTER MIT EINER ZÜNDEINRICHTUNG**
BYPASS SWITCH COMPRISING A DETONATING DEVICE
COMMUTATEUR DE DÉRIVATION COMPRENANT UN DISPOSITIF DE DÉTONATION

(43) Veröffentlichungstag der Anmeldung: 08.02.2023
(73) Patentinhaber: Siemens Energy Global GmbH & Co. KG, 81739 München (DE)
(72) Erfinder: ZENKNER, Andreas, 90587 Veitsbronn (DE)
(86) Internationale Anmeldenummer: PCT/EP2020/062455
(87) Internationale Veröffentlichungsnummer: WO 2021/223858

(56) Entgegenhaltungen:
- EP-A1- 2 983 286
- WO-A1-2020/030262
- US-A- 4 343 242

## Beschreibung

Die Erfindung betrifft eine Anordnung mit einem Überbrückungsschalter für ein Modul eines modularen Multilevelstromrichters, wobei der Überbrückungsschalter durch eine pyrotechnische Treibladung antreibbar ist. Ein derartiger Überbrückungsschalter ist beispielsweise aus der internationalen Patentanmeldung WO 2011/107363 A1 bekannt.

Modulare Multilevelstromrichter weisen eine Vielzahl von Modulen auf, welche elektrisch in Reihe geschaltet sind. Wenn eines der Module der Reihenschaltung während des Betriebs des Multilevelstromrichters ausfällt oder in einen unkontrollierbaren Zustand gerät, dann wird dieses Modul mittels des Überbrückungsschalters elektrisch überbrückt. Dadurch wird sichergestellt, dass der Multilevelstromrichter auch bei Ausfall von einem oder von mehreren Modulen weiterarbeiten kann. Solche Ausfälle können unterschiedliche Ausprägungen aufweisen: sie reichen beispielsweise von einem Kurzschluss bis hin zu Fehlerfällen, bei denen eine explosionsartige Zerstörung von Teilen des Moduls auftreten kann.

Zum Auslösen eines derartigen Überbrückungsschalters ist es aus der Patentanmeldung WO 2020/030262 A1 bekannt, die Treibladung mittels einer pyrotechnischen Anzündleitung zu zünden. Allerdings ist es dabei notwendig, nach jeder Nutzung die ausgebrannte Anzündleitung durch eine neue Anzündleitung zu ersetzen.

Aus der Schrift US 4 343 242 A ist bekannt, bei einer Hochspannungsanwendung eine Treibladung eines Schalters mittels eines Lasers zu zünden, wobei der Laserstrahl über einen Lichtleiter zu der Treibladung übertragen wird.

Die europäische Patentanmeldung EP 2 983 286 A1 offenbart ein Submodul für eine modulare Stromrichterschaltung, wobei das Submodul mit einem Bypassschalter überbrückbar ist. Es sind zwei redundante elektrische Zündkreise zum Zünden eines pyrotechnischen Kraftelements des Bypassschalters vorhanden.

Der Erfindung liegt die Aufgabe zugrunde, eine Anordnung und ein Verfahren anzugeben, bei denen nach einem Schließen des Überbrückungsschalters kein kostenintensives Erneuern einer energieübertragenden Leitung notwendig ist.

Diese Aufgabe wird erfindungsgemäß gelöst durch eine Anordnung und durch ein Verfahren gemäß den unabhängigen Patentansprüchen. Vorteilhafte Ausgestaltungen der Anordnung und des Verfahrens sind in den abhängigen Patentansprüchen angegeben.

Offenbart wird eine Anordnung mit
- einem Überbrückungsschalter für ein Modul eines modularen Multilevelstromrichters, wobei der Überbrückungsschalter durch eine Treibladung antreibbar ist, und
- einer ersten Zündeinrichtung zum Zünden der Treibladung, wobei die erste Zündeinrichtung einen (der Treibladung zugeordneten) ersten Lichtleiter zum Zuführen von Lichtenergie zu der Treibladung (zur Zündung der Treibladung) aufweist.

Dabei ist vorteilhaft, dass bei der Zuführung/Übertragung der Lichtenergie zu der Treibladung mittels des elektrisch isolierenden Lichtleiters eine elektrische Potentialtrennung vorhanden ist. Mittels des Lichtleiters kann insbesondere eine optische Zündung der Treibladung durchgeführt werden. Eine solche optische Zündung kann vorteilhafterweise störsicher ausgeführt werden, zum Beispiel störsicher gegenüber elektromagnetischen Feldern. Der Lichtleiter kann insbesondere ein Lichtwellenleiter sein.

Die Anordnung kann so ausgestaltet sein, dass
- der erste Lichtleiter die Treibladung mit einer ersten Lichtquelle, insbesondere einer ersten Laserlichtquelle, verbindet. Dabei kann insbesondere ein Ende des ersten Lichtleiters mit der ersten Lichtquelle gekoppelt sein und ein zweites Ende des Lichtleiters mit der Treibladung gekoppelt sein.

Die Anordnung kann auch so ausgestaltet sein, dass
- die erste Lichtquelle beabstandet von dem Modul angeordnet ist. Da der erste Lichtleiter (und auch der zweite Lichtleiter) elektrisch isolierend sind, ist dies auch bei einem auf einem großen elektrischen Potential (insbesondere Hochspannungspotential) liegenden Modul problemlos möglich. Es kann also vorteilhafterweise eine große elektrische Potentialdifferenz zwischen Modul und Lichtquelle bestehen.

Die Anordnung kann so ausgestaltet sein, dass
- die erste Lichtquelle im Wesentlichen auf Erdpotential angeordnet ist. Wie vorstehend schon erwähnt, ist dies aufgrund des elektrisch isolierenden ersten und zweiten Lichtleiters ohne weiteres möglich. Die erste Lichtquelle kann beispielsweise bei einer zentralen Steuereinrichtung des Multilevelstromrichters angeordnet sein, wobei die zentrale Steuereinrichtung mit Erdpotential verbunden ist.

Die Anordnung weist erfindungsgemäß
- eine zweite Zündeinrichtung zum Zünden der Treibladung auf, wobei die zweite Zündeinrichtung einen (der Treibladung zugeordneten) elektrischen Anzünder und einen elektrischen Leiter zum Zuführen von elektrischer Energie zu dem elektrischen Anzünder (zur Zündung der Treibladung) aufweist. Mittels der zweiten Zündeinrichtung kann unabhängig von der ersten Zündeinrichtung die Treibladung gezündet werden. Dies erhöht die Sicherheit (redundanter Betrieb) und ermöglicht eine vielseitige Ansteuerung des Überbrückungsschalters. Dabei weist die zweite Zündeinrichtung den elektrischen Leiter zum Zuführen von elektrischer Energie auf.

Die Anordnung ist so ausgestaltet, dass
- der elektrische Leiter den elektrischen Anzünder mit einer Elektroenergiequelle verbindet.

Die Anordnung kann so ausgestaltet sein, dass
- die erste Lichtquelle eine Laserlichtquelle mit einer Leistung (Laserleistung) von mindestens 1 Watt ist. Insbesondere kann die Leistung zwischen 1 Watt und 10 Watt (einschließlich 1 Watt und 10 Watt) liegen. Es hat sich gezeigt, dass mit einer derartigen Leistung die Treibladung sehr schnell gezündet werden kann und folglich der Überbrückungsschalter bei Bedarf sehr schnell geschlossen werden kann.

Die Anordnung kann so ausgestaltet sein, dass
- die Elektroenergiequelle an dem Modul angeordnet ist und/oder auf einem elektrischen Potential angeordnet ist, dass sich beim Betrieb des modularen Multilevelstromrichters vom Erdpotential unterscheidet. Insbesondere kann die Elektroenergiequelle im Wesentlichen auf dem elektrischen Potential des Moduls angeordnet sein. Dadurch gibt es beim Betrieb des Multilevelstromrichters nur eine geringe Potentialdifferenz zwischen der Elektroenergiequelle und dem Modul, wodurch Isolationsprobleme vermieden werden. Die Module sind bei Betrieb des Multilevelstromrichters nämlich zum Teil auf einem hohen elektrischen Potential angeordnet.

Die Anordnung kann so ausgestaltet sein, dass
- das Modul einen ersten Modulanschluss, einen zweiten Modulanschluss, ein erstes elektronisches Schaltelement und ein zweites elektronisches Schaltelement aufweist.

Die Anordnung kann so ausgestaltet sein, dass
- das erste elektronische Schaltelement und das zweite elektronische Schaltelement in einer Halbbrückenschaltung angeordnet sind. Ein solches Modul wird auch als Halbbrücken-Modul bezeichnet.

Die Anordnung kann so ausgestaltet sein, dass
- das Modul ein drittes elektronisches Schaltelement und ein viertes elektronisches Schaltelement aufweist, wobei das erste elektronische Schaltelement, das zweite elektronische Schaltelement, das dritte elektronische Schaltelement und das vierte elektronische Schaltelement in einer Vollbrückenschaltung angeordnet sind. Ein derartiges Modul wird auch als Vollbrücken-Modul bezeichnet.

Offenbart wird weiterhin ein modularer Multilevelstromrichter mit einer Mehrzahl von Anordnungen gemäß einer der vorstehend beschriebenen Varianten.

Bei einem solchen modularen Multilevelstromrichter können die Module zweipolige Module sein, welche elektrisch in Reihe geschaltet sind.

Offenbart wird weiterhin ein Verfahren zum elektrischen Überbrücken (Kurzschließen) eines Moduls eines modularen Multilevelstromrichters gemäß den Merkmalen des Anspruchs 12.

Dabei kann die erste Lichtquelle beabstandet von dem Modul angeordnet sein.

Das beschriebene Verfahren und die beschriebenen Anordnungen weisen gleiche bzw. gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel eines modularen Multilevelstromrichters, in
- Figur 2: ein beispielhaftes Modul des Multilevelstromrichters mit einer Anordnung, in
- Figur 3: ein weiteres beispielhaftes Modul des Multilevelstromrichters mit einer Anordnung, in
- Figur 4: ein Beispiel einer Treibladung mit zwei Zündeinrichtungen und in
- Figur 5: ein weiteres Beispiel einer Treibladung mit zwei Zündeinrichtungen dargestellt.

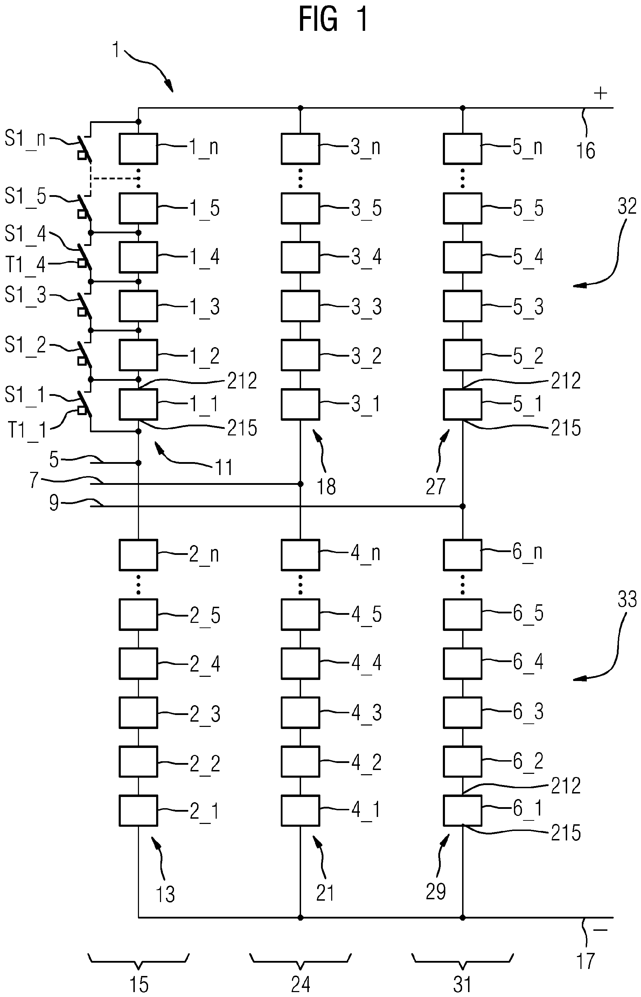

In Figur 1 ist ein Ausführungsbeispiel eines Stromrichters 1 in Form eines modularen Multilevelstromrichters 1 dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein positivseitiges Stromrichterteil 32; der zweite Phasenmodulzweig 13, der vierte Phasenmodulzweig 21 und der sechste Phasenmodulzweig 29 bilden ein negativseitiges Stromrichterteil 33.

Jeder Phasenmodulzweig weist eine Mehrzahl von Modulen (1_1, 1_2, 1_3, 1_4 ... 1_n; 2_1 ... 2_n; usw.) auf, welche (mittels ihrer Modulanschlüsse) elektrisch in Reihe geschaltet sind. Solche Module werden auch als Submodule bezeichnet. Im Ausführungsbeispiel der Figur 1 weist jeder Phasenmodulzweig n Module auf. Die Anzahl der mittels ihrer Modulanschlüsse elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

Die Module 1_1 bis 6_n werden von einer nicht dargestellten Steuereinrichtung angesteuert. Von dieser zentralen Steuereinrichtung werden optische Nachrichten bzw. optische Signale über eine optische Kommunikationsverbindung (zum Beispiel über einen Lichtwellenleiter) zu den einzelnen Modulen übertragen. Beispielsweise sendet die Steuereinrichtung an die einzelnen Module jeweils einen Sollwert zur Höhe der Ausgangsspannung, die das jeweilige Modul bereitstellen soll.

Jedem Modul 1_1 bis 6_n des modularen Multilevelstromrichters 1 ist ein Überbrückungsschalter zugeordnet. So ist beispielsweise dem Modul 1_1 des ersten Phasenmodulzweigs 11 ein erster Überbrückungsschalter S1_1 zugeordnet. In gleicher Weise ist dem zweiten Modul 1_2 ein zweiter Überbrückungsschalter S1_2 zugeordnet und dem n-ten Modul 1_n des ersten Phasenmodulzweigs 11 ist ein n-ter Überbrückungsschalter S1_n zugeordnet. Auch den Modulen der anderen Phasenmodulzweige ist jeweils ein Überbrückungsschalter zugeordnet; diese Überbrückungsschalter sind jedoch aus Gründen der Übersichtlichkeit in der Figur 1 nicht dargestellt. Die Überbrückungsschalter weisen insbesondere jeweils einen Festkontakt und einen Bewegkontakt auf. Es handelt sich also insbesondere um mechanische Überbrückungsschalter.

Der erste Überbrückungsschalter S1_1 überbrückt (in seinem geschlossenen Zustand) das erste Modul 1_1. Dazu ist der Festkontakt des ersten Überbrückungsschalters S1_1 mit dem ersten Modulanschluss 212 elektrisch verbunden; der Bewegkontakt des ersten Überbrückungsschalters S1_1 ist mit dem zweiten Modulanschluss 215 elektrisch verbunden. Der erste Überbrückungsschalter S1_1 weist eine pyrotechnische Treibladung T1_1 (Treibsatz T1_1) auf. Diese pyrotechnische Treibladung T1_1 ist in der Figur 1 als ein kleines Quadrat symbolisiert. Diese Treibladung T1_1 ist dazu eingerichtet, auf ihre Entzündung hin den Überbrückungsschalter S1_1 zu schließen. Dies erfolgt insbesondere dadurch, dass die pyrotechnische Treibladung T1_1 auf ihre Entzündung hin den Bewegkontakt des ersten Überbrückungsschalters S1_1 in Richtung des Festkontakts beschleunigt und dadurch den ersten Überbrückungsschalter S1_1 schließt.

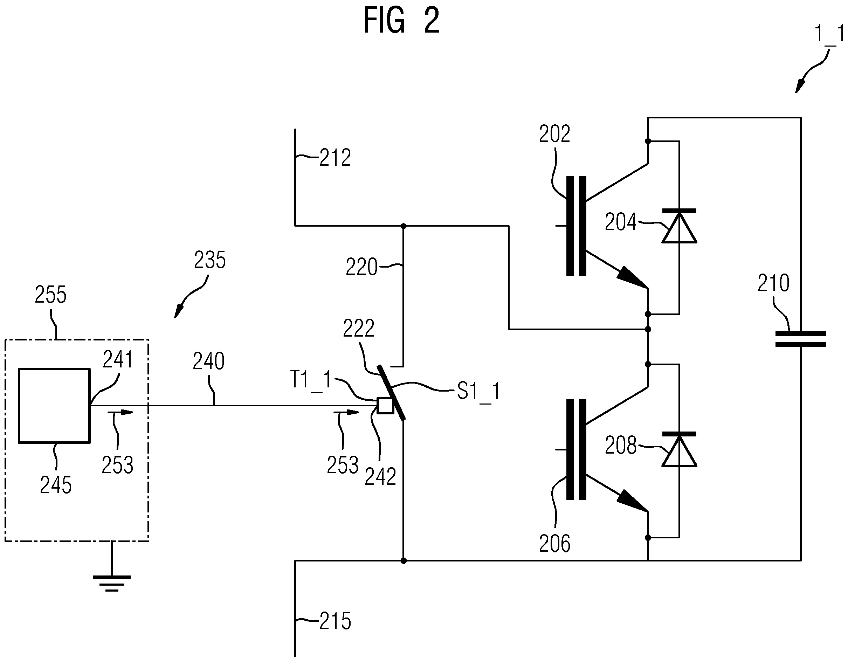

In Figur 2 ist ein Ausführungsbeispiel eines Moduls des Multilevelstromrichters 1 mit einer erfindungsgemäßen Anordnung dargestellt. Bei diesem Modul kann es sich beispielsweise um das Modul 1_1 (oder auch um eines der anderen Module) des modularen Multilevelstromrichters 1 handeln.

Das Modul 1_1 ist als ein Halbbrücken-Modul 1_1 ausgestaltet. Das Modul 1_1 weist ein erstes (abschaltbares) elektronisches Schaltelement 202 (erstes abschaltbares Halbleiterventil 202) mit einer ersten antiparallel geschalteten Diode 204 auf. Weiterhin weist das Modul 1_1 ein zweites (abschaltbares) elektronisches Schaltelement 206 (zweites abschaltbares Halbleiterventil 206) mit einer zweiten antiparallel geschalteten Diode 208 sowie einen elektrischen Energiespeicher 210 in Form eines Kondensators 210 auf. Das erste elektronische Schaltelement 202 und das zweite elektronische Schaltelement 206 sind jeweils als ein IGBT (insulated-gate bipolar transistor) ausgestaltet. Das erste elektronische Schaltelement 202 ist elektrisch in Reihe geschaltet mit dem zweiten elektronischen Schaltelement 206. Am Verbindungspunkt zwischen den beiden elektronischen Schaltelementen 202 und 206 ist ein erster (galvanischer) Modulanschluss 212 angeordnet. An dem Anschluss des zweiten elektronischen Schaltelements 206, welcher dem Verbindungspunkt gegenüberliegt, ist ein zweiter (galvanischer) Modulanschluss 215 angeordnet. Der zweite Modulanschluss 215 ist weiterhin mit einem ersten Anschluss des Energiespeichers 210 elektrisch verbunden; ein zweiter Anschluss des Energiespeichers 210 ist elektrisch verbunden mit dem Anschluss des ersten elektronischen Schaltelements 202, der dem Verbindungspunkt gegenüberliegt.

Der Energiespeicher 210 ist also elektrisch parallel geschaltet zu der Reihenschaltung aus dem ersten elektronischen Schaltelement 202 und dem zweiten elektronischen Schaltelement 206. Durch entsprechende Ansteuerung des ersten elektronischen Schaltelements 202 und des zweiten elektronischen Schaltelements 206 durch die Steuereinrichtung des Stromrichters kann erreicht werden, dass zwischen dem ersten Modulanschluss 212 und dem zweiten Modulanschluss 215 entweder die Spannung des Energiespeichers 210 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

Der Energiespeicher 210 ist optional und kann in anderen Ausführungsbeispielen auch weggelassen werden. In diesen Ausführungsbeispielen weist dann das Modul jeweils nur ein oder mehrere elektronische Schaltelemente auf; es handelt sich dann um ein Schaltmodul.

Parallel zu dem Modul 1_1 ist ein Überbrückungsschalter S1_1 geschaltet. Der Überbrückungsschalter S1_1 weist einen Festkontakt 220 und einen Bewegkontakt 222 auf. Der Festkontakt 220 ist elektrisch mit einem der beiden Modulanschlüsse verbunden; der Bewegkontakt 222 ist elektrisch mit dem anderen der beiden Modulanschlüsse verbunden. Im Ausführungsbeispiel ist der Festkontakt 220 mit dem ersten Modulanschluss 212 verbunden; der Bewegkontakt 222 ist mit dem zweiten Modulanschluss 215 verbunden.

Der mechanische Überbrückungsschalter S1_1 ist also zwischen den ersten Modulanschluss 212 und den zweiten Modulanschluss 215 geschaltet. Wenn der mechanische Überbrückungsschalter S1_1 in den geschlossenen Zustand / eingeschalteten Zustand übergeht, dann überbrückt der mechanische Überbrückungsschalter S1_1 das Modul 1_1; das Modul ist dann mittels des mechanischen Überbrückungsschalters S1_1 kurzgeschlossen. Der Überbrückungsschalter stellt also eine Kurzschließeinrichtung dar. Der Betriebsstrom des Stromrichters fließt dann beispielsweise vom ersten Modulanschluss 212 über den mechanischen Überbrückungsschalter S1_1 zum zweiten Modulanschluss 215 (und nicht über die übrigen Bauelemente des Moduls 1_1, insbesondere nicht über die Schaltelemente 202, 206 und die Dioden 204, 208).

Der Überbrückungsschalter S1_1 weist die Treibladung T1_1 auf. Dem Überbrückungsschalter S1_1 (bzw. dem Modul 1_1) ist eine erste Zündeinrichtung 235 zugeordnet. Die erste Zündeinrichtung 235 weist einen Lichtleiter 240 und eine erste Lichtquelle 245 auf.

Die Treibladung T1_1 ist mittels des Lichtleiters 240 mit der ersten Lichtquelle 245 verbunden. Bei der ersten Lichtquelle 245 kann es sich grundsätzlich um eine beliebige Lichtquelle handeln. Im Ausführungsbeispiel handelt es sich um eine Laserlichtquelle 245. Ein erstes Ende 241 des Lichtleiters 240 ist mit der ersten Lichtquelle 245 gekoppelt; ein zweites Ende 242 des ersten Lichtleiters 240 ist mit der Treibladung T1_1 gekoppelt.

Die erste Lichtquelle 245 ist beabstandet von dem Modul 1_1 und damit auch beabstandet von dem Überbrückungsschalter S1_1 angeordnet. Dabei kann der Abstand zwischen der ersten Lichtquelle 245 und dem Modul 1_1 ohne Weiteres mehrere zehn Meter oder auch eine dreistelligen Meteranzahl betragen.

Die erste Lichtquelle 245 ist insbesondere Teil einer Schalter-Steuerungseinheit 255. Diese Schalter-Steuerungseinheit 255 kann Teil der zentralen Steuereinrichtung/zentralen Steuerung des Multilevelstromrichters 1 sein. Die Schalter-Steuerungseinheit 255 ist vorzugsweise auf Erdpotential angeordnet. Die Schalter-Steuerungseinheit 255 kann eine zentrale Schalter-Steuerungseinheit des Multilevelstromrichters 1 sein. Das bedeutet, die Schalter-Steuerungseinheit 255 kann mehrere oder alle Überbrückungsschalter des Multilevelstromrichters 1 ansteuern.

Mittels der ersten Lichtquelle 245 wird (im Falle eines Auftretens eines Fehlers an dem ersten Modul 1_1) ein optisches Zündsignal 253 erzeugt, welches an dem ersten Ende 241 in den ersten Lichtleiter 240 eingespeist wird. Das optische Zündsignal 253 wird daraufhin bis zu dem zweiten Ende 242 des ersten Lichtleiters übertragen. Am zweiten Ende 242 verlässt das optische Zündsignal 253 den Lichtleiter 240 und trifft auf die Treibladung T1_1 auf. Durch das optische Zündsignal 253 wird dann die Treibladung T1_1 gezündet. Daraufhin wird der Überbrückungsschalter S1_1 geschlossen und das Modul 1_1 wird elektrisch überbrückt.

Das optische Zündsignal 253 kann insbesondere Laserlicht sein; die erste Lichtquelle 245 ist dann eine Laserlichtquelle. Diese Laserlichtquelle 245 sendet Laserlicht/Laserlichtimpulse aus. Grundsätzlich kann aber auch anderes Licht verwendet werden. Das verwendete Licht braucht lediglich eine Energiemenge zu übertragen, die zum Zünden der Treibladung ausreicht. Es hat sich herausgestellt, dass ein Laser mit einer Leistung von mindestens 1 W vorteilhaft ist, weil mit einer solchen Laserleistung die Treibladung ausreichend schnell gezündet werden kann. Ein Laser mit einer Leistung zwischen 1 W und 10 W ist also besonders vorteilhaft. Als Treibladung kann eine handelsübliche Treibladung verwendet werden, die beispielsweise unter der Bezeichnung BKNO3 erhältlich ist.

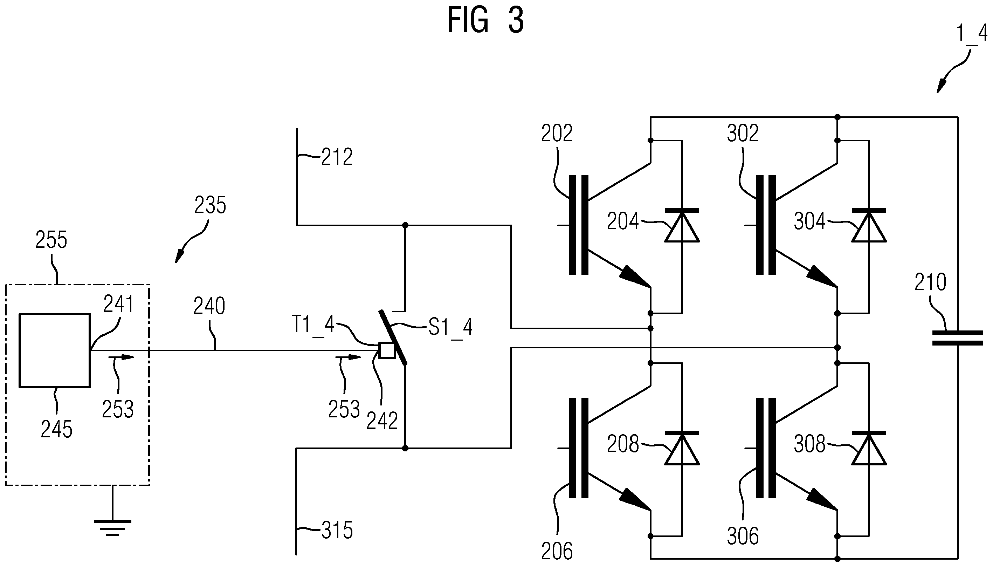

In Figur 3 ist ein weiteres Ausführungsbeispiel eines Moduls des modularen Multilevelstromrichters mit einer erfindungsgemäßen Anordnung dargestellt. Bei diesem Modul handelt es sich um das Modul 1_4 des modularen Multilevelstromrichters 1. Es kann sich jedoch bei diesem Modul auch um eines der anderen Module des modularen Multilevelstromrichters 1 handeln.

Zusätzlich zu den bereits aus Figur 2 bekannten ersten elektronischen Schaltelement 202, zweiten elektronischen Schaltelement 206, erster Freilaufdiode 204, zweiter Freilaufdiode 208 und Energiespeicher 210 weist das in Figur 3 dargestellte Modul 1_4 ein drittes elektronisches Schaltelement 302 mit einer antiparallel geschalteten dritten Freilaufdiode 304 sowie ein viertes elektronisches Schaltelement 306 mit einer vierten antiparallel geschalteten Freilaufdiode 308 auf. Das dritte elektronische Schaltelement 302 und das vierte elektronische Schaltelement 306 sind jeweils als ein IGBT ausgestaltet. Im Unterschied zur Schaltung der Figur 2 ist der zweite Modulanschluss 315 nicht mit dem zweiten elektronischen Schaltelement 206 elektrisch verbunden, sondern mit einem Mittelpunkt (Verbindungspunkt) einer elektrischen Reihenschaltung aus dem dritten elektronischen Schaltelement 302 und dem vierten elektronischen Schaltelement 306.

Das Modul 1_4 der Figur 3 ist ein sogenanntes Vollbrücken-Modul 1_4. Dieses Vollbrücken-Modul 1_4 zeichnet sich dadurch aus, dass bei entsprechender Ansteuerung der vier elektronischen Schaltelemente zwischen dem ersten (galvanischen) Modulanschluss 212 und dem zweiten (galvanischen) Modulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 1_4 die Polarität der Ausgangsspannung umgekehrt werden. Der Multilevelstromrichter 1 kann entweder nur Halbbrücken-Module, nur Vollbrücken-Module oder auch Halbbrücken-Module und Vollbrücken-Module aufweisen.

Parallel zu dem Modul 1_4 ist der mechanische Überbrückungsschalter S1_4 geschaltet. Der mechanische Überbrückungsschalter S1_4 ist also zwischen den ersten Modulanschluss 212 und den zweiten Modulanschluss 315 geschaltet (der erste Modulanschluss 212 und der zweite Modulanschluss 315 sind also mittels des Überbrückungsschalters S1_4 miteinander verbunden). Wenn der mechanische Überbrückungsschalter S1_4 in seinen eingeschalteten Zustand / elektrisch leitfähigen Zustand übergeht, dann überbrückt der mechanische Überbrückungsschalter S1_4 das Modul 1_4; der mechanische Überbrückungsschalter S1_4 schließt das Modul 1_4 kurz. Der Betriebsstrom des Stromrichters fließt dann beispielsweise vom ersten Modulanschluss 212 über den mechanischen Überbrückungsschalter S1_4 zum zweiten Modulanschluss 315 (und nicht über die übrigen Bauelemente des Moduls 1_4, insbesondere nicht über die Schaltelemente 202, 206, 302, 306 und/oder die Dioden 204, 208, 304, 308). Der mechanische Überbrückungsschalter S1_4 kann wie der mechanische Überbrückungsschalter S1_1 aufgebaut sein.

Der Überbrückungsschalter S1_4 weist eine Treibladung T1_4 auf, welche über den ersten Lichtleiter 240 mit der ersten Lichtquelle 245 verbunden ist. Die Zündung der Treibladung T1_4 mittels der ersten Lichtquelle 245 und das Schließen des Überbrückungsschalters S1_4 erfolgt dabei gleichartig wie im Zusammenhang mit der Figur 2 beschrieben.

Am Beispiel des Moduls 1_4 lässt sich besonders gut die Problematik der unterschiedlichen elektrischen Potentiale erkennen. Je nach Schaltstellung des dritten elektronischen Schaltelementes 302 und des vierten elektronischen Schaltelementes 306 kann der zweite Modulanschluss 315 entweder mit dem oberen Anschluss des elektrischen Energiespeichers 210 oder mit dem unteren Anschluss des elektrischen Energiespeichers 210 verbunden sein, also mit zwei unterschiedlich großen elektrischen Potentialen. Aufgrund des ersten Lichtleiters 240 findet jedoch vorteilhafterweise eine elektrische galvanische Trennung zwischen dem Überbrückungsschalter S1_4 und der Schalter-Steuerungseinheit 255 statt, so dass die Schalter-Steuerungseinheit 255 nicht durch die (oftmals hohen) wechselnden elektrischen Potentiale des Moduls 1_4 beeinträchtigt wird. Mittels des ersten Lichtleiters 240 kann also sehr einfach und kostengünstig eine galvanische Trennung zwischen dem Modul 1_4 und der Schalter-Steuerungseinheit 255 erreicht werden.

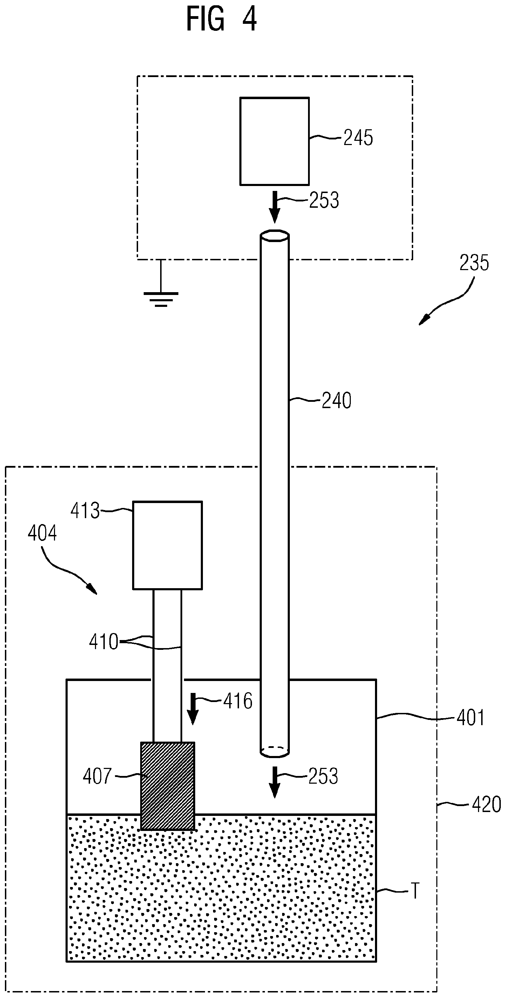

In Figur 4 ist ein Ausführungsbeispiel einer Treibladung T mit zwei Zündeinrichtungen dargestellt. Bei der Treibladung T kann es sich beispielsweise um die Treibladung T1_1 oder um die Treibladung T1_4 handeln. Die Treibladung T befindet sich in einer nur schematisch dargestellten Ausnehmung 401 des Überbrückungsschalters. Die Ausnehmung 401 kann insbesondere eine Kammer 401 sein (Treibladungs-Kammer).

Die erste Zündeinrichtung 235 ist wie in den Figuren 2 und 3 ausgestaltet. Zusätzlich ist die Treibladung T mit einer zweiten Zündeinrichtung 404 versehen. Diese zweite Zündeinrichtung 404 weist im Ausführungsbeispiel einen elektrischen Anzünder 407, einen oder zwei elektrische Leiter 410 zum Zuführen von elektrischer Energie zu dem elektrischen Anzünder 407 und eine Elektroenergiequelle 413 auf. Der oder die elektrischen Leiter 410 dienen zum Zuführen von elektrischer Energie zu dem elektrischen Anzünder 407. Der elektrische Leiter 410 verbindet den elektrischen Anzünder 407 mit der Elektroenergiequelle 413.

Der elektrische Anzünder 407 ist dazu eingerichtet, auf ein elektrisches Signal 416 hin die Treibladung T anzuzünden. Dies kann beispielsweise dadurch realisiert sein, dass der elektrische Anzünder aufgrund der Energie des elektrischen Signals eine heiße oder glühende Stelle erzeugt, welche an der Treibladung angeordnet ist. Durch diese heiße oder glühende Stelle wird die Treibladung angezündet. Insbesondere kann der elektrische Anzünder so ausgestaltet sein, dass er zusätzlich zu der heißen oder glühenden Stelle einen erhöhten Druck aufbaut. Dadurch kann die Treibladung durch die Kombination von Hitze und Druck angezündet werden.

Mittels der Elektroenergiequelle 413 wird (im Falle eines Auftretens eines Fehlers an dem Modul) das elektrische Zündsignal 416 erzeugt. Dieses elektrische Zündsignal 416 wird über den oder die elektrischen Leiter 410 zu dem elektrischen Anzünder 407 übertragen. Auf das elektrische Zündsignal 416 hin zündet der elektrische Anzünder 407 die Treibladung **T.** Daraufhin wird der zugehörige Überbrückungsschalter geschlossen und das Modul wird elektrisch überbrückt.

Im Ausführungsbeispiel der Figur 4 ist die zweite Zündeinrichtung 404 und damit auch die Elektroenergiequelle 413 an einem Ort angeordnet, an dem im Wesentlichen das elektrische Potential 420 des Moduls vorliegt. Dieses elektrische Potential 420 des Moduls entspricht im Wesentlichen dem elektrischen Potential des Überbrückungsschalters. Dadurch gibt es keine erhöhten elektrischen Isolationsanforderungen an die zweite Zündeinrichtung 404.

Mittels der zweiten Zündeinrichtung 404 kann insbesondere das Schließen des Überbrückungsschalters unmittelbar von dem jeweiligen Modul aus veranlasst werden. Dieses Schließen kann beispielsweise dann notwendig werden, wenn die Modulspannung unzulässige Werte annimmt, wenn also beispielsweise der maximal zulässige Spannungswert oder die maximal zulässige Spannungsanstiegsgeschwindigkeit überschritten wird. Dies ermöglicht einen (autarken) Schutz des Moduls.

Die erste Lichtquelle 245 der ersten Zündeinrichtung ist (wie bei den Figuren 2 und 3) beabstandet von dem Modul (und damit auch beabstandet von dem Überbrückungsschalter) angeordnet, insbesondere in etwa auf Erdpotential angeordnet. Das Ausführungsbeispiel erlaubt eine wahlweise oder kombinierte Zündung der Treibladung über einen Lichtimpuls und/oder ein elektrisches Signal.

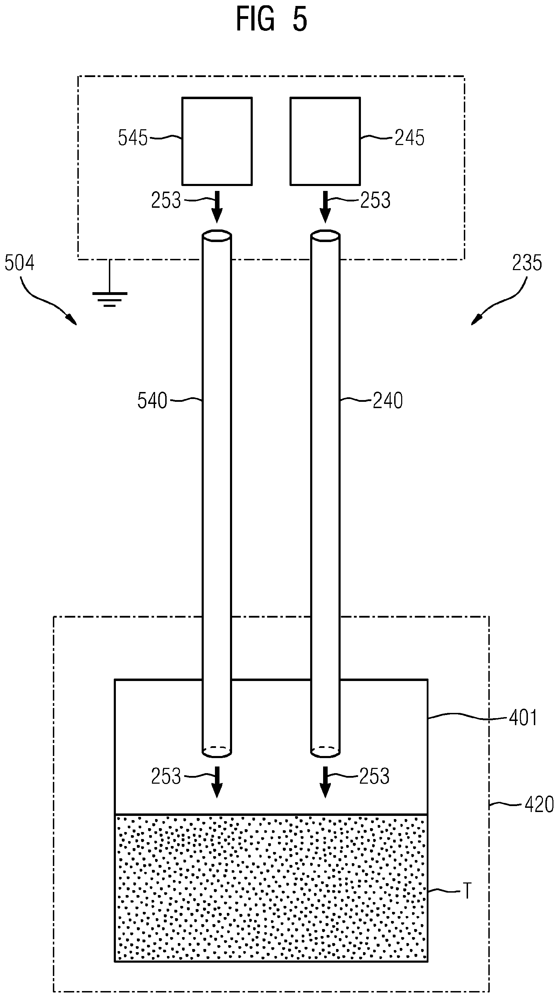

In Figur 5 ist ein weiteres Beispiel einer Treibladung T mit zwei Zündeinrichtungen dargestellt, das nicht zur vorliegenden Erfindung gehört. Die erste Zündeinrichtung 235 ist wie in den Figuren 2 und 3 ausgestaltet. Zusätzlich ist die Treibladung T mit einer zweiten Zündeinrichtung 504 versehen. Diese zweite Zündeinrichtung 504 weist einen zweiten Lichtleiter 54C und eine zweite Lichtquelle 545 auf. Das Zünden der Treibladung T mittels der zweiten Zündeinrichtung 504 läuft gleichartig ab wie das Zünden mit der ersten Zündeinrichtung 235. Im exemplarischen Beispiel sind die erste Lichtquelle 245 die zweite Lichtquelle 545 beabstandet/entfernt von dem Überbrückungsschalter angeordnet, insbesondere auf Erdpotential angeordnet. Das Beispiel zeigt also einen Überbrückungsschalter mit zwei elektrischen Zündkreisen.

Insbesondere sind alle Überbrückungsschalter des modularen Multilevelstromrichters jeweils mit mindestens einer eigenen Zündeinrichtung versehen.

Es wurde eine Anordnung und ein Verfahren beschrieben, mit denen sicher und zuverlässig ein Modul eines modularen Multilevelstromrichters im Fehlerfall überbrückt werden kann. Dabei ist vorteilhaft, dass mittels des Lichtleiters die Treibladung von einem entfernten Ort aus (zum Beispiel von der zentralen Steuereinrichtung des Stromrichters aus) gezündet werden kann, ohne dass zusätzliche Aufwände zur elektrischen Isolation notwendig sind. Damit ist ein unmittelbar lichtgezündeter bzw. lichtzündbarer Überbrückungsschalter realisiert.

Mittels des elektrischen Leiters kann alternativ ebenfalls die Treibladung gezündet werden, wobei eine zugehörige elektrische Energiequelle beispielsweise unmittelbar bei dem Modul und auf dessen elektrischen Potential angeordnet sein kann.

Die beschriebene Anordnung und das beschriebene Verfahren weisen insbesondere folgende Vorteile auf:
- Ermöglichen der Ansteuerung eines auf einem hohen Spannungspotential liegenden (pyrotechnisch angetriebenen) Überbrückungsschalters von Erdpotential aus
- Ermöglichen einer störsicheren optischen Ansteuerung
- Ermöglichen einer direkten Ansteuerung des Überbrückungsschalters aus der Ferne, insbesondere von der Control-Ebene / zentralen Steuereinrichtung des Stromrichters aus.

Es verlaufen ein oder zwei Lichtleiter unmittelbar bis zur pyrotechnischen Treibladung. Alternativ können auch ein Lichtleiter und ein elektrischer Leiter verwendet werden. Dies ermöglicht eine potentialfreie Anzündung der Treibladung durch Einleitung von Licht, das die notwendige Energie zum Entzünden der Treibladung aufweist.

Die zweite Zündeinrichtung (die einen zweiten Kanal zum Zünden der Treibladung darstellt) kann ebenso potentialgetrennt und ESD-fest mittels eines Lichtleiters als lichtgezündeter Kanal realisiert sein oder auch als ein elektrischer Kanal. Eine Erhöhung der Verfügbarkeit durch unterschiedliche Ansteuerkanäle mit unterschiedlichen Medien und Quellen (Hochspannungs-Baugruppe / Steuerungs-Baugruppe) ist ein weiterer positiver Aspekt der beschriebenen Anordnung und des beschriebenen Verfahrens.

## Patentansprüche

1. Anordnung mit
- einem Überbrückungsschalter (S1_1) für ein Modul (1_1) eines modularen Multilevelstromrichters (1), wobei der Überbrückungsschalter (S1_1) durch eine Treibladung (T1_1) antreibbar ist, und
- einer ersten Zündeinrichtung (235) zum Zünden der Treibladung (T1_1),
wobei
- die erste Zündeinrichtung (235) einen ersten Lichtleiter (240) zum Zuführen von Lichtenergie zu der Treibladung (T1_1) aufweist,
- die Anordnung eine zweite Zündeinrichtung (404) zum Zünden der Treibladung aufweist, wobei die zweite Zündeinrichtung (404) einen elektrischen Anzünder (407) und einen elektrischen Leiter (410) zum Zuführen von elektrischer Energie zu dem elektrischen Anzünder (407) aufweist, und
- der elektrische Leiter (410) den elektrischen Anzünder (407) mit einer Elektroenergiequelle (413) verbindet.

2. Anordnung nach Anspruch 1,
**dadurch gekennzeichnet, dass**
- der erste Lichtleiter (240) die Treibladung (T1_1) mit einer ersten Lichtquelle (245), insbesondere einer ersten Laserlichtquelle, verbindet.

3. Anordnung nach Anspruch 2,
**dadurch gekennzeichnet, dass**
- die erste Lichtquelle (245) beabstandet von dem Modul (1_1) angeordnet ist.

4. Anordnung nach Anspruch 2 oder 3,
**dadurch gekennzeichnet, dass**
- die erste Lichtquelle (245) im Wesentlichen auf Erdpotential angeordnet ist.

5. Anordnung nach einem der Ansprüche 2 bis 4,
**dadurch gekennzeichnet, dass**
- die erste Lichtquelle (245) eine Laserlichtquelle mit einer Leistung von mindestens 1 Watt ist.

6. Anordnung nach einem der vorhergehenden Ansprüche, **dadurch gekennzeichnet, dass**
- die Elektroenergiequelle (413) an dem Modul angeordnet ist und/oder auf einem elektrischen Potential (420) angeordnet ist, dass sich beim Betrieb des modularen Multilevelstromrichters (1) vom Erdpotential unterscheidet.

7. Anordnung nach einem der vorhergehenden Ansprüche, **dadurch gekennzeichnet, dass**
- das Modul (1_1) einen ersten Modulanschluss (212), einen zweiten Modulanschluss (215), ein erstes elektronisches Schaltelement (202) und ein zweites elektronisches Schaltelement (206) aufweist.

8. Anordnung nach Anspruch 7,
**dadurch gekennzeichnet, dass**
- das erste elektronische Schaltelement (202) und das zweite elektronische Schaltelement (206) in einer Halbbrückenschaltung angeordnet sind.

9. Anordnung nach Anspruch 7,
**dadurch gekennzeichnet, dass**
- das Modul (1_4) ein drittes elektronisches Schaltelement (302) und ein viertes elektronisches Schaltelement (306) aufweist, wobei das erste elektronische Schaltelement (202), das zweite elektronische Schaltelement (206), das dritte elektronische Schaltelement (302) und das vierte elektronische Schaltelement (306) in einer Vollbrückenschaltung angeordnet sind.

10. Modularer Multilevelstromrichter (1) mit einer Mehrzahl von Anordnungen nach einem der Ansprüche 1 bis 9.

11. Modularer Multilevelstromrichter nach Anspruch 10, **dadurch gekennzeichnet, dass**
- die Module zweipolige Module (1_1 ... 6_n) sind, welche elektrisch in Reihe geschaltet sind.

12. Verfahren zum elektrischen Überbrücken eines Moduls (1_1) eines modularen Multilevelstromrichters (1),
wobei parallel zu dem Modul (1_1) ein Überbrückungsschalter (S1_1) geschaltet ist, der durch eine Treibladung (T1_1) antreibbar ist,
- mit einer ersten Zündeinrichtung (235) zum Zünden der Treibladung (T1_1),
- wobei die erste Zündeinrichtung (235) eine erste Lichtquelle (245) und einen ersten Lichtleiter (240) zum Zuführen von Lichtenergie zu der Treibladung (T1_1) aufweist,
- mit einer zweite Zündeinrichtung (404, 504) zum Zünden der Treibladung, wobei die zweite Zündeinrichtung (404) einen elektrischen Anzünder (407) und einen elektrischen Leiter (410) zum Zuführen von elektrischer Energie zu dem elektrischen Anzünder (407) aufweist, und
- wobei der elektrische Leiter (410) den elektrischen Anzünder (407) mit einer Elektroenergiequelle (413) verbindet,
wobei bei dem Verfahren
- mittels der ersten Lichtquelle (245) Licht, insbesondere Laserlicht, in den ersten Lichtleiter (240) eingespeist wird,
- daraufhin von dem ersten Lichtleiter (240) das Licht zu der Treibladung (T1_1) übertragen wird, und
- durch das Licht die Treibladung (T1_1) gezündet wird, woraufhin der Überbrückungsschalter (S1_1) geschlossen und dadurch das Modul (1_1) elektrisch überbrückt wird,
oder
- mittels der Elektroenergiequelle (413) ein elektrisches Zündsignal (416) erzeugt wird,
- dieses elektrische Zündsignal (416) über den elektrischen Leiter (410) zu dem elektrischen Anzünder (407) übertragen wird, und
- auf das elektrische Zündsignal (416) hin von dem elektrischen Anzünder (407) die Treibladung (T) gezündet wird, woraufhin der Überbrückungsschalter (S1_1) geschlossen und dadurch das Modul (1_1) elektrisch überbrückt wird.

13. Verfahren nach Anspruch 12,
**dadurch gekennzeichnet, dass**
- die erste Lichtquelle (245) beabstandet von dem Modul (1_1) angeordnet ist.

## Claims

1. Arrangement having
- a bypass switch (S1_1) for a module (1_1) of a modular multilevel converter (1), wherein the bypass switch (S1_1) can be driven by a propellant charge (T1_1), and
- a first ignition device (235) for igniting the propellant charge (T1_1),
wherein
- the first ignition device (235) has a first light guide (240) for supplying light energy to the propellant charge (T1_1),
- the arrangement has a second ignition device (404) for igniting the propellant charge, wherein the second ignition device (404) comprises an electric igniter (407) and an electrical conductor (410) for supplying electrical energy to the electric igniter (407), and
- the electrical conductor (410) connects the electric igniter (407) to an electrical energy source (413).

2. Arrangement according to Claim 1,
**characterized in that**
- the first light guide (240) connects the propellant charge (T1_1) to a first light source (245), in particular a first laser light source.

3. Arrangement according to Claim 2,
**characterized in that**
- the first light source (245) is arranged at a distance from the module (1_1).

4. Arrangement according to Claim 2 or 3,
**characterized in that**
- the first light source (245) is essentially arranged at earth potential.

5. Arrangement according to one of Claims 2 to 4, **characterized in that**
- the first light source (245) is a laser light source with a power of at least 1 watt.

6. Arrangement according to any one of the preceding claims, **characterized in that**
- the electrical energy source (413) is arranged on the module and/or is arranged at an electrical potential (420) that differs from the earth potential when the modular multilevel converter (1) is in operation.

7. Arrangement according to any one of the preceding claims, **characterized in that**
- the module (1_1) has a first module terminal (212), a second module terminal (215), a first electronic switching element (202) and a second electronic switching element (206).

8. Arrangement according to Claim 7,
**characterized in that**
- the first electronic switching element (202) and the second electronic switching element (206) are arranged in a half-bridge circuit.

9. Arrangement according to Claim 7,
**characterized in that**
- the module (1_4) has a third electronic switching element (302) and a fourth electronic switching element (306), wherein the first electronic switching element (202), the second electronic switching element (206), the third electronic switching element (302) and the fourth electronic switching element (306) are arranged in a full-bridge circuit.

10. Modular multilevel converter (1) having a plurality of arrangements according to any one of Claims 1 to 9.

11. Modular multilevel converter according to Claim 10, **characterized in that**
- the modules are two-pole modules (1_1 ... 6_n) which are connected electrically in series.

12. Method for electrically bypassing a module (1_1) of a modular multilevel converter (1),
wherein a bypass switch (S1_1) is connected in parallel with the module (1_1), which bypass switch can be driven by a propellant charge (T1_1),
- having a first ignition device (235) for igniting the propellant charge (T1_1),
- wherein the first ignition device (235) has a first light source (245) and a first light guide (240) for supplying light energy to the propellant charge (T1_1),
- having a second ignition device (404, 504) for igniting the propellant charge, wherein the second ignition device (404) comprises an electric igniter (407) and an electrical conductor (410) for supplying electrical energy to the electric igniter (407), and
- wherein the electrical conductor (410) connects the electric igniter (407) to an electrical energy source (413),
wherein, in the method,
- light, in particular laser light, is fed into the first light guide (240) by means of the first light source (245),
- the light is then transmitted from the first light guide (240) to the propellant charge (T1_1), and
- the light ignites the propellant charge (T1_1), which causes the bypass switch (S1_1) to close and the module (1_1) to be electrically bypassed as a result,
or
- an electrical ignition signal (416) is generated by means of the electrical energy source (413),
- this electrical ignition signal (416) is transmitted via the electrical conductor (410) to the electric igniter (407), and
- the electric igniter (407) ignites the propellant charge (T) in response to the electrical ignition signal (416), whereupon the bypass switch (S1_1) is closed and the module (1_1) is electrically bypassed as a result.

13. Method according to Claim 12,
**characterized in that**
- the first light source (245) is arranged at a distance from the module (1_1).

## Revendications

1. Agencement comprenant
- un interrupteur (S1_1) de shuntage pour un module (1_1) d'un convertisseur (1) modulaire à plusieurs niveaux, dans lequel l'interrupteur (S1_1) de shuntage peut être entraîné par une charge (T1_1) d'attaque, et
- un premier dispositif (235) d'allumage pour l'allumage de la charge (T1_1) d'attaque,
dans lequel
- le premier dispositif (235) d'allumage a une première fibre (240) optique pour envoyer de l'énergie lumineuse à la charge (T1_1) d'attaque,
- l'agencement a un deuxième dispositif (404) d'allumage pour l'allumage de la charge d'attaque, dans lequel le dispositif (404) d'allumage a un allumeur (407) électrique et un conducteur (410) électrique pour envoyer de l'énergie électrique à l'allumeur (407) électrique, et
- le conducteur (410) électrique relie l'allumeur (407) électrique a une source (413) d'énergie électrique.

2. Agencement suivant la revendication 1,
**caractérisé en ce que**
- la première fibre (240) optique relie la charge (T1_1) d'attaque à une première source (245) lumineuse, en particulier à une première source de lumière laser.

3. Agencement suivant la revendication 2,
**caractérisé en ce que**
- la première source (245) lumineuse est disposée à distance du module (1_1).

4. Agencement suivant la revendication 2 ou 3,
**caractérisé en ce que**
- la première source (245) lumineuse est mise sensiblement au potentiel de terre.

5. Agencement suivant l'une des revendications 2 à 4, **caractérisé en ce que**
- la première source (245) lumineuse est une source de lumière laser d'une puissance d'au moins 1 watt.

6. Agencement suivant l'une des revendications précédentes, **caractérisé en ce que**
- la source (413) d'énergie électrique est montée sur le module et/ou est mise à un potentiel (420) électrique, qui, lorsque le convertisseur (1) modulaire à plusieurs niveaux fonctionne, est différent du potentiel de terre.

7. Agencement suivant l'une des revendications précédentes, **caractérisé en ce que**
- le module (1_1) a une première borne (212) de module, une deuxième borne (215) de module, un premier élément (202) électronique de coupure et un deuxième (206) électronique de coupure.

8. Agencement suivant la revendication 7,
**caractérisé en ce que**
- le premier élément (202) électronique de coupure et le deuxième élément (206) électronique de coupure sont montés en un circuit en demi-pont.

9. Agencement suivant la revendication 7,
**caractérisé en ce que**
- le module (1_4) a un troisième élément (302) électronique de coupure et un quatrième élément (306) électronique de coupure, dans lequel le premier élément (202) électronique de coupure, le deuxième élément (206) électronique de coupure, le troisième élément (302) électronique et le quatrième élément (306) électronique de coupure sont montés en un circuit en pont complet.

10. Convertisseur (1) modulaire à plusieurs niveaux ayant une pluralité d'agencements suivant l'une des revendications 1 à 9.

11. Convertisseur modulaire à plusieurs niveaux suivant la revendication 10,
**caractérisé en ce que**
- les modules sont des modules (1_1 ... 6_n) bipolaires, qui sont montés électriquement en série.

12. Procédé de shuntage électrique d'un module (1_1) d'un convertisseur (1) modulaire à plusieurs niveaux,
dans lequel il est monté, en parallèle avec le module (1_1), un interrupteur (S1_1) de shuntage, qui peut être entraîné par une charge (T1_1) d'attaque,
- comprenant un premier dispositif (235) d'allumage pour l'allumage de la charge (T1_1) d'attaque,
- dans lequel le premier dispositif (235) d'allumage a une première source (245) et une première fibre (240) optique pour envoyer de l'énergie lumineuse à la charge (T1_1) d'attaque,
- comprenant un deuxième dispositif (404, 504) d'allumage pour l'allumage de la charge d'attaque, dans lequel le deuxième dispositif (404) d'allumage a un allumeur (407) électrique et un conducteur (410) électrique pour envoyer de l'énergie électrique à l'allumeur (407) électrique, et
- dans lequel le conducteur (410) électrique relie l'allumeur (407) électrique à une source (413) d'énergie électrique,
dans lequel, dans le procédé,
- au moyen de la première source (245) lumineuse, on envoie de la lumière, en particulier de la lumière laser, dans la première fibre (240) optique,
- on transmet ensuite la lumière par la première fibre (240) optique à la charge (T1_1) d'attaque, et
- par la lumière, on allume la charge (T1_1) d'attaque, puis on ferme l'interrupteur (S1_1) de shuntage, et ainsi on shunte électriquement le module (1_1), ou
- au moyen de la source (413) d'énergie électrique, on produit un signal (416) électrique d'allumage,
- on transmet ce signal (416) électrique d'allumage à l'allumeur (407) électrique en passant par le conducteur (410) électrique, et
- sur le signal (416) électrique d'allumage, on allume la charge (T) d'attaque par l'allumeur (407) électrique, puis on ferme l'interrupteur (S1_1) de shuntage et on shunte ainsi électriquement le module (1_1).

13. Procédé suivant la revendication 12,
**caractérisé en ce que**
- l'on met la première source (245) lumineuse à distance du module (1_1).
